# EUROPÄISCHE PATENTSCHRIFT

(11) **EP 0 945 258 B1**
(45) Veröffentlichungstag und Bekanntmachung des Hinweises auf die Patenterteilung: **29.12.2004**
(21) Anmeldenummer: 99105341.4
(22) Anmeldetag: 16.03.1999
(51) Int. Cl.: B32B 27/36, B65D 65/40

(54) **Siegelfähige Polyesterfolie mit hoher Sauerstoffbarriere, Verfahren zu ihrer Herstellung und ihre Verwendung**
Sealable polyester film with good oxygen barrier properties, method for its manufacture and its use
Feuille en polyester scellable ayant des bonnes propriétés de barrière à l'oxygène, son procédé de fabrication et son utilisation

(30) Priorität: 25.03.1998 DE 19813269
(43) Veröffentlichungstag der Anmeldung: 29.09.1999
(73) Patentinhaber: Mitsubishi Polyester Film GmbH, 65203 Wiesbaden (DE)
(72) Erfinder: Peiffer, Herbert, Dr., 55126 Mainz (DE); Bennett, Cynthia, Dr., 55232 Alzey (DE); Hilkert, Gottfried, Dr., 55291 Saulheim (DE)
(74) Vertreter: Schweitzer, Klaus, Dr.

(56) Entgegenhaltungen:
- EP-A- 0 836 936
- EP-A- 0 849 075
- EP-A- 0 865 907
- PATENT ABSTRACTS OF JAPAN vol. 1996, no. 10, 31. Oktober 1996 (1996-10-31) & JP 08 156183 A (TOPPAN PRINTING CO LTD), 18. Juni 1996 (1996-06-18)
- PATENT ABSTRACTS OF JAPAN vol. 1996, no. 02, 29. Februar 1996 (1996-02-29) & JP 07 276492 A (TORAY IND INC), 24. Oktober 1995 (1995-10-24)

## Beschreibung

Die Erfindung betrifft eine transparente, biaxial orientierte Polyesterfolie mit einer Basisschicht B, die zu mindestens 80 Gew.-% aus einem thermoplastischen Polyester besteht, und zwei Deckschichten A und C. Die Erfindung betrifft weiterhin ein Verfahren zur Herstellung der Folie und ihre Verwendung.

In vielen Fällen wird bei Lebensmittelverpackungen eine hohe Sperrwirkung gegenüber Gasen, Wasserdampf und Aromastoffen verlangt. Üblicherweise werden deshalb metallisierte oder mit Polyvinylidenchlorid (PVDC) beschichtete Polypropylenfolien verwendet. Metallisierte Polypropylenfolien sind jedoch nicht transparent und werden deshalb dort nicht eingesetzt, wo der Blick auf den Inhalt zusätzliche Werbewirksamkeit verspricht. Mit PVDC beschichtete Folien sind zwar transparent, aber die Beschichtung erfolgt - ebenso wie die Metallisierung - in einem zweiten Arbeitsgang, der die Verpackung deutlich verteuert. Ethylen-Vinylalkohol-Copolymere (EVOH) zeigen ebenfalls eine hohe Sperrwirkung. Aber mit EVOH modifizierte Folien sind besonders stark gegenüber Feuchte empfindlich, was den Anwendungsbereich einschränkt. Wegen ihrer schlechten mechanischen Eigenschaften sind sie zudem relativ dick, oder sie müssen kostenintensiv mit anderen Materialien laminiert werden. Außerdem sind sie nach Gebrauch problematisch zu entsorgen. Daneben wird in vielen Verpackungsanlagen neben der guten Barriere auch eine Siegelfähigkeit der Folien verlangt.

In der älteren EP 0 849 075 A2 ist eine koextrudierte, biaxial orientierte siegelfähige Polyesterfolie mit einer Basisschicht aus Polyethylenterephthalat und zwei siegelfähigen Deckschichten und ein Verfahren zu ihrer Herstellung sowie ihre Verwendung beschrieben. Die Deckschichten bestehen bevorzugt aus Copolymeren mit einem Ethylen-2,6-naphthalat-Gehalt von 5 bis 95 % und haben eine Siegelanspringtemperatur von kleiner 120 °C, insbesondere kleiner als 116 °C. Die siegelfähigen Deckschichten habe eine Dicke von 0,2 bis 5 µm. Die Folie ist coronabehandelt und kann In-Line beschichtet sein. Die Folie wird in der Weise hergestellt, dass mindestens ein Polyethylen-2,6-naphthalat enthaltendes Copolymer und ein Polyester aus einer Breitschlitzdüse auf eine Kühlwalze coextrudiert werden, dort abgekühlt werden und der so erhaltene Vorfilm anschließend monoaxial oder biaxial orientiert wird, hitzefixiert und schließlich aufgewickelt wird. Die Folie wird als Verpackungsfolie oder für die Herstellung geprägter Folien beispielsweise für holografische Anwendungen verwendet. Es werden keine Hinweise oder explizite Angaben zu den Barriereeigenschaften der Folie gemacht.

Aufgabe der vorliegenden Erfindung ist es deshalb, eine transparente, siegelfähige, biaxial orientierte Polyesterfolie mit hoher Sauerstoffbarriere zur Verfügung zu stellen, die sich einfach und wirtschaftlich herstellen läßt, die guten physikalischen Eigenschaften der bekannten Folien besitzt und keine Entsorgungsprobleme verursacht.

Gelöst wird die Aufgabe durch eine mindestens dreischichtige, biaxial orientierte Polyesterfolie mit einer Basisschicht B, die zu mindestens 80 Gew.-% aus einem thermoplastischen Polyester besteht und zwei Deckschichten A und C, wobei die Folie dadurch gekennzeichnet ist, daß die Deckschicht A teilkristallin ist und aus einem Polymer oder einem Gemisch von Polymeren besteht/bestehen, das mindestens 40 Gew.-% an Ethylen-2,6-naphthalat-Einheiten und bis zu 40 Gew.-% an Ethylen-terephthalat-Einheiten und/oder bis zu 60 % Einheiten aus cycloaliphatischen oder aromatischen Diolen und/oder Dicarbonsäuren enthält, und die gegenüberliegende Deckschicht C amorph ist und eine Siegeltemperatur von ≤ 130 °C aufweist. Die erfindungsgemäße Folie weist allgemein eine Sauerstoffpermeation von weniger als 80 cm³/m² bar d, bevorzugt weniger als 75 cm³/m² bar d, besonders bevorzugt weniger als 70 cm³/m² bar d auf.

Bevorzugt ist eine Polyesterfolie, in der die Polymere der Deckschicht A mindestens 65 Gew.-% an Ethylen-2,6-naphthalat-Einheiten und bis zu 35 Gew.-% an Ethylen-terephthalat-Einheiten enthalten. Davon ist wiederum eine solche Polyesterfolie besonders bevorzugt, in der die Polymere der Deckschicht A mindestens 70 Gew.-% an Ethylen-2,6-naphthalat-Einheiten und bis zu 30 Gew.-% an Ethylen-terephthalat-Einheiten enthalten. Die Deckschicht A kann jedoch auch vollständig aus Ethylen-2,6-naphthalat-Polymeren bestehen.

Geeignete aliphatische Diole sind beispielsweise Diethylenglykol, Triethylenglykol, aliphatische Glykole der allgemeinen Formel HO-(CH₂)ₙ-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen, cycloaliphatische, gegebenenfalls heteroatomhaltige Diole mit einem oder mehreren Ring. Von den cycloaliphatischen Diolen sind Cyclohexandiole (insbesondere Cyclohexan-1,4-diol) zu nennen. Geeignete andere aromatische Diole entsprechen beispielsweise der Formel HO-C₆H₄-X-C₆H₄-OH, wobei X für -CH₂-, -C(CH₃)₂-, -C(CF₃)₂-, -O-, -S- oder -SO₂- steht. Daneben sind auch Bisphenole der Formel HO-C₆H₄-C₆H₄-OH gut geeignet.

Aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die (C₃-C₁₉)Alkandisäuren besonders geeignet, wobei der Alkanteil geradkettig oder verzweigt sein kann.

Gegenstand der vorliegenden Erfindung ist auch ein Verfahren zur Herstellung dieser Folie. Es umfaßt das
a) Herstellen einer Folie aus Basis- und Deckschichten A und C durch Coextrusion,
b) biaxiale Verstrecken der Folie und
c) Thermofixieren der verstreckten Folie.

Zur Herstellung der Deckschicht A werden zweckmäßig Granulate aus Polyethylenterephthalat und Polyethylen-2,6-naphthalat im gewünschten Mischungsverhältnis direkt dem Extruder zugeführt. Die beiden Materialien lassen sich bei etwa 300 °C und bei einer Verweilzeit von etwa 5 min aufschmelzen und extrudieren. Unter diesen Bedingungen können im Extruder Umesterungsreaktionen ablaufen, bei denen sich Copolymere aus den Homopolymeren bilden.

Die Polymere für die Basisschicht B werden zweckmäßig über einen weiteren Extruder zugeführt. Etwa vorhandene Fremdkörper oder Verunreinigungen lassen sich aus der Polymerschmelze vor der Extrusion abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiteren Walzen abgezogen und verfestigt.

Die biaxiale Verstreckung wird im allgemeinen sequentiell durchgeführt. Dabei wird vorzugsweise erst in Längsrichtung (d.h. in Maschinenrichtung) und anschließend in Querrichtung (d.h. senkrecht zur Maschinenrichtung) verstreckt. Dies führt zu einer Orientierung der Molekülketten. Das Verstrecken in Längsrichtung läßt sich mit Hilfe zweier entsprechend dem angestrebten Streckverhältnis verschieden schnell laufenden Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 130 °C und die Querstreckung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgmein im Bereich von 3,0:1 bis 5,0:1, bevorzugt von 3,5:1 bis 4,5:1.

Bei der nachfolgenden Thermofixierung wird die Folie etwa 0,1 bis 10 s lang bei einer Temperatur von 150 bis 250 °C gehalten. Anschließend wird die Folie in üblicher Weise aufgewickelt.

Von großem Vorteil bei diesem Verfahren ist, daß dem Extruder Granulate zugegeben werden können, die die Maschine nicht verkleben.

Die Basisschicht B der Folie besteht bevorzugt zu mindestens 90 Gew.-% aus dem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure (= Poly(1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, bevorzugt mindestens 95 mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen Diolen bzw. Dicarbonsäuren. Geeignete Diol-Comonomere sind beispielsweise Diethylenglykol, Triethylenglykol, aliphatische Glykole der allgemeinen Formel HO-(CH₂)ₙ-OH, wobei n eine ganze Zahl von 3 bis 6 darstellt, verzweigte aliphatische Glykole mit bis zu 6 Kohlenstoff-Atomen, aromatische Diole der allgemeinen Formel HO-C₆H₄-X-C₆H₄-OH, wobei X für -CH₂-, -C(CH₃)₂-, -C(CF₃)₂-, -O-, -S- oder -SO₂- steht, oder Bisphenole der allgemeinen Formel HO-C₆H₄-C₆H₄-OH eingesetzt werden.

Die Dicarbonsäure-Comonomereinheiten leiten sich bevorzugt ab von Benzoldicarbonsäuren, Naphthalindicarbonsäuren, Biphenyl-x,x'-dicarbonsäuren (insbesondere Biphenyl-4,4'-dicarbonsäure), Cyclohexandicarbonsäuren (insbesondere Cyclohexan-1,4-dicarbonsäure), Diphenylacetylen-x,x'-dicarbonsäuren (insbesondere Diphenylacetylen-4,4'-dicarbonsäure), Stilben-x,x'-dicarbonsäure oder (C₁-C₁₆)Alkandicarbonsäuren, wobei der Alkanteil geradkettig oder verzweigt sein kann.

Die Herstellung der Polyester kann nach dem Umesterungsverfahren erfolgen. Dabei geht man von Dicarbonsäureestern und Diolen aus, die mit den üblichen Umesterungskatalysatoren, wie Zink-, Calcium-, Lithium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Für die Verarbeitung der Polymere hat es sich als günstig erwiesen, die Polymere für die Basisschicht und die Deckschicht(en) so zu wählen, daß sich die Viskositäten der jeweiligen Polymerschmelzen nicht zu sehr unterscheiden. Im anderen Fall ist mit Fließstörungen oder Streifenbildung auf der fertigen Folie zu rechnen. Für die Beschreibung der Viskositätsbereiche der beiden Schmelzen wird eine modifizierte Lösungsmittelviskosität (SV-Wert oder solution viscosity) verwendet. Die Lösungsmittelviskosität ist ein Maß für das Molekulargewicht des jeweiligen Polymers und korreliert mit der Schmelzviskosität. Je nach chemischer Zusammensetzung des verwendeten Polymers ergeben sich andere Korrelationen. Für handelsübliche Polyethylenterephthalate, die sich zur Herstellung von biaxial orientierten Folien eignen, liegen die SV-Werte im Bereich von 600 bis 1000. Um eine einwandfreie Qualität der Folie zu gewährleisten, sollte der SV-Wert der Copolymere für die Deckschicht im Bereich von 300 bis 900 liegen, vorzugsweise zwischen 400 und 800, insbesondere zwischen 500 und 700. Falls erwünscht, kann an den jeweiligen Granulaten eine Festphasenkondensation durchgeführt werden, um die benötigte Schmelzeviskosität der Materialien einzustellen. Allgemein gilt, daß sich die Schmelzeviskositäten der Polymerschmelzen für Basis- und Deckschicht(en) um nicht mehr als den Faktor 5, vorzugsweise den Faktor 2 bis 3, unterscheiden sollten.

Die Polymere für die Deckschicht A können auf 3 verschiedene Weisen hergestellt werden:
a) Bei der gemeinsamen Polykondensation werden Terephthalsäure und Naphthalin-2,6-dicarbonsäure gemeinsam mit Ethylenglykol in einem Reaktionskessel vorgelegt und unter Verwendung der üblichen Katalysatoren und Stabilisatoren zu einem Polyester polykondensiert. Die Terephthalat- und Naphthalat-Einheiten sind dann in dem Polyester statistisch verteilt.
b) Polyethylenterephthalat (PET) und Polyethylen-2,6-naphthalat (PEN) werden im gewünschten Verhältnis gemeinsam aufgeschmolzen und gemischt. Dies kann entweder in einem Reaktionskessel oder vorzugsweise in einem Schmelzkneter (Zweischneckenkneter) oder einem Extruder erfolgen. Sofort nach dem Aufschmelzen beginnen Umesterungsreaktionen zwischen den Polyestern. Zunächst erhält man Blockcopolymere, aber mit zunehmender Reaktionszeit - abhängig von der Temperatur und Mischwirkung des Rührelements - werden die Blöcke kleiner, und bei langer Reaktionszeit erhält man ein statistisches Copolymer. Allerdings ist es nicht nötig und auch nicht unbedingt vorteilhaft zu warten, bis eine statistische Verteilung erreicht ist, denn die gewünschten Eigenschaften werden auch mit einem Blockcopolymer erhalten. Anschließend wird das erhaltene Copolymer aus einer Düse herausgepreßt und granuliert.
c) PET und PEN werden als Granulat im gewünschten Verhältnis gemischt und die Mischung dem Extruder für die Deckschicht zugeführt. Hier findet die Umesterung zum Copolymer direkt während der Herstellung der Folie statt. Dieses Verfahren hat den Vorteil, daß es sehr wirtschaftlich ist. In der Regel werden mit diesem Verfahren Blockcopolymere erhalten, wobei die Blocklänge von der Extrusionstemperatur, der Mischwirkung des Extruders und der Verweilzeit in der Schmelze abhängt.

In einer bevorzugten Ausführungsform der Erfindung sind 0,1 bis 20 Gew.-% der Polymere der Basisschicht identisch mit denen der Deckschicht. Diese werden der Basisschicht entweder direkt bei der Extrusion beigemischt oder sind automatisch in der Folie durch Regeneratzugabe enthalten. Der Anteil dieser Copolymere in der Basisschicht ist so gewählt, daß die Basisschicht teilkristallinen Charakter aufweist.

Die erfindungsgemäße Folie zeigt eine überraschend hohe Sauerstoffbarriere. Werden dagegen für die Deckschicht A Polymere verwendet, die weniger als 40 Gew.-% Ethylen-2,6-naphthalat-Einheiten und mehr als 40 Gew.-% Ethylenterephthalat-Einheiten enthalten, dann ist die Folie in manchen Fällen zwar etwas weniger durchlässig für Sauerstoff als eine Standardpolyesterfolie (die zu 100 Gew.-% aus Polyethylenterephthalat besteht), die Durchlässigkeit ist jedoch noch immer viel zu hoch. Es wurde sogar gefunden, daß die Sauerstoffbarriere geringer ist als bei einer Standardpolyesterfolie, wenn die Deckschicht 30 bis 40 Gew.-% Ethylen-2,6-naphthalat-Einheiten und 60 bis 70 Gew.-% Ethylenterephthalat-Einheiten enthält. Selbst unter diesen Umständen kann jedoch eine Folie mit einer Deckschicht A, die zwischen 5 und 40 Gew.-% Ethylen-2,6-napthalat-Einheiten und mehr als 40 Gew.-% Ethylen-terephthalat-Einheiten enthält vorteilhaft sein, wenn die Sauerstoffbarriere für die betreffende Anwendung keine entscheidende Rolle spielt.

Zweckmäßigerweise sollte - neben der Basisschicht - auch die Deckschicht A teilkristallin sein. Es wurde überraschenderweise gefunden, daß insbesondere die Kristallinität der Deckschichten einen Einfluß auf die Barriereeigenschaften der Folie hat. Ist die Kristallinität hoch, so ist auch die Barriere hoch. Die Kristallinität der Folie kann mittels FTIR-Spektroskopie definiert werden, wobei für die Bestimmung der Kristallinität der Deckschicht im ATR-Modus gemessen werden sollte. Die Kristallinität wird am Vorhandensein spezifischer Banden nachgewiesen. Die Form der Kristallite (ob α-Form oder β-Form) scheint nicht kritisch zu sein. Für Ethyleneinheiten enthaltende Copolyester liegen die Banden für die symmetrischen CH-Valenzschwingungen bei 2990 und 2971 cm⁻¹ (α-Form) bzw. 2998 und 2971 cm⁻¹ (β-Form) [s. F. Kimura et al., Journal of Polymer Science: Polymer Physics, Vol. 35, S. 2041-2047. 1997].

Die Basisschicht B und die Deckschichten A und C können zusätzlich übliche Additive, wie Stabilisatoren und Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt. Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Arcrylat-Partikel.

Als Additive können auch Mischungen von zwei und mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den üblichen Konzentrationen, z.B. als glykolische Dispersion während der Polykondensation oder über Masterbatche bei der Extrusion zugegeben werden. Als besonders geeignet haben sich Pigmentkonzentrationen von 0,0001 bis 5 Gew.-% erwiesen. Eine detaillierte Beschreibung der Antiblockmittel findet sich beispielsweise in der EP-A 0 602 964.

Zur Einstellung weiterer gewünschter Eigenschaften kann die Folie corona- bzw. flammvorbehandelt und/oder beschichtet sein. Typische Beschichtungen sind haftvermittelnde, antistatisch, schlupfverbessernd oder dehäsiv wirkende Schichten. Es bietet sich an, diese zusätzlichen Schichten über in-line coating mittels wässriger Dispersionen vor der Querverstreckung auf die Folie aufzubringen.

Die erfindungsgemäße Polyesterfolie enthält noch die zweite, siegelfähige Deckschicht C. Aufbau, Dicke und Zusammensetzung der zweiten Deckschicht C sind unabhängig von der bereits vorhandenen Deckschicht A, wobei die zweite Deckschicht C ebenfalls die bereits genannten Polymere oder Polymermischungen enthalten kann, welche aber im wesentlichen nicht mit der der ersten Deckschicht identisch sind. Voraussetzung für die Erzielung der Siegelfähigkeit mit der angegebenen Siegelanspringtemperatur von s bis 130 °C ist, daß die Deckschicht C - im Gegensatz zur Deckschicht A - amorph ist.

Dies erreicht man bei Einsatz der für die Deckschicht A angegebenen Polymere, z.B. dadurch, daß der Anteil an Ethylen-2,6-naphthalat-Einheiten zwischen 25 und 75 Gew.-% und der Anteil an Ethylen-terephthalat-Einheiten zwischen 75 und 25 Gew.-% liegt und/oder bis zu 50 Gew.-%-Einheiten aus cycloaliphatischen oder aromatischen Diolen und/oder Dicarbonsäuren enthält. In einer bevorzugten Ausführungsfrom beträgt der Anteil an Ethylen-2,6-naphthalat-Einheiten zwischen 30 und 70 Gew.-% und in einer besonders bevorzugten Ausführungsform zwischen 35 und 65 Gew.-%.

Die heißsiegelfähige Schicht kann aber auch aus anderen Polyesterharzen zusammengesetzt sein. Bevorzugt sind Copolyesterharze, die von aromatischen Dicarbonsäuren, wie z.B. Terephthalatsäure, Isophthalsäure und Hexahydroterephthalsäure und von Gylkolen, wie Ethylenglykol, Diethylenglykol, Triethylenglykol oder Neopenthylglykol abgeleitet sind. Typische Copolyester, die eine Siegelfähigkeit mit dem angegebenen Siegelbereich ermöglichen, sind aus Ethylenterephthalat und Ethylenisophthalat, wobei der Anteil an Ethylenterephthalat 50 bis 90 Gew.-% und der Anteil an Ethylenisophthalat 90 bis 50 Gew.-% beträgt. Bevorzugte Bereiche sind 65 bis 85 Gew.-% Ethylenterephthalat und 35 bis 15 Gew.-% Ethylenisophthalat, wie sie z.B. in der EP-A-0 515 096 oder der EP-A-0 035 835 beschrieben sind.

Die zweite Deckschichten A und C kann auch andere gängige Deckschichtpolymere enthalten.

Zwischen der Basisschicht B und den Deckschichten A und C kann sich gegebenenfalls noch eine Zwischenschicht befinden. Sie kann aus den für die Basisschichten beschriebenen Polymeren bestehen. In einer besonders bevorzugten Ausführungsform besteht sie aus dem für die Basisschicht verwendeten Polyester. Sie kann auch die beschriebenen üblichen Additive enthalten. Die Dicke der Zwischenschicht ist im allgemeinen größer als 0,3 µm und liegt vorzugsweise im Bereich von 0,5 bis 15 µm, insbesondere 1,0 bis 10 µm.

Die Dicke der Deckschichten A und C ist im allgemeinen größer als 0,1 µm und liegt vorzugsweise im Bereich von 0,2 bis 5 µm, insbesondere 0,2 bis 4 µm, wobei die Deckschichten gleich oder verschieden dick sein können.

Die Gesamtdicke der erfindungsgemäßen Polyesterfolie kann innerhalb weiter Grenzen variieren und richtet sich nach dem beabsichtigten Verwendungszweck. Sie beträgt vorzugsweise 4 bis 100 µm, insbesondere 5 bis 50 µm, vorzugsweise 6 bis 30 µm, wobei die Basisschicht einen Anteil von vorzugsweise etwa 40 bis 90 % an der Gesamtdicke hat.

Ein weiterer Vorteil besteht darin, daß die Herstellungskosten der erfⁱndungsgemäßen Folie nur unwesentlich über denen einer Folie aus Standardpolyesterrohstoffen liegen. Die sonstigen verarbeitungs- und gebrauchsrelevanten Eigenschaften der erfindungsgemäßen Folie bleiben im wesentlichen unverändert oder sind sogar verbessert. Daneben ist bei der Herstellung der Folie gewährleistet, daß das Regenerat in einem Anteil von bis zu 50 Gew.-%, bevorzugt 10 bis 50 Gew.-%, jeweils bezogen auf das Gesamtgewicht der Folie, wiederverwendet werden kann, ohne daß dabei die physikalischen Eigenschaften der Folie nennenswert negativ beeinflußt werden.

Die Folie eignet sich hervorragend zum Verpacken von Nahrungs- und Genußmitteln.

Üblicherweise werden für diesen Einsatzzweck die Folien metallisiert oder keramisch (z.B. SiOₓ, AlₓO_{y}, Na₂SiO₄, etc.) beschichtet. Überraschenderweise hat sich gezeigt, daß die Barrierewirkung wesentlich besser als bei herkömmlichen metallisierten oder keramisch beschichteten Polyesterfolien ist, wenn man die Metall- bzw. Keramikschicht auf die PEN-haltige Deckschicht A der erfindungsgemäßen Folie aufbringt. Herkömmliche metallisierte Polyesterfolien zeigen Barrierewerte von > 0.6 cm³/m²•d•bar, wobei die metallisierten erfindungsgemäßen Folien Barrierewerte von < 0.1 cm³/m²•d•bar aufweisen. Generell hat sich gezeigt, daß - unabhängig von der Art der Beschichtung - die Barrierewirkung der erfindungsgemäßen Folien um den Faktor 10 besser ist als die herkömmlicher Polyesterfolien.

Hierbei hat sich gezeigt, daß auch schon eine geringe Deckschichtendicke von <1,5 µm, vorzugsweise < 1,0 µm ausreicht, um die genannten guten Barrierewirkungen hervorzurufen.

Weitere Anwendungsgebiete für die erfindungsgemäßen Folien sind Dosenbeschichtungen (Can-Liner), Deckelfolien (z.B. Deckel für Yoghurtbecher, etc.) und TTR-Bänder (Thermo Transfer Ribbon).

Zur Charakterisierung der Rohstoffe und der Folien wurden die folgenden Methoden benutzt:

Die Messung der Sauerstoffbarriere erfolgte mit einem OX-TRAN 2/20 von Mocon Modern Controls (USA) entsprechend DIN 53380, Teil 3.

Zur Bestimmung des SV-Wertes (SV = solvent viscosity) wurde eine Polyester-Probe in einem Lösungsmittel (Dichloressigsäure) gelöst (1 Gew-%ige Lösung). Die Viskosität dieser Lösung sowie die Viskosität des reinen Lösungsmittels wurden in einem Ubbelohde-Viskosimeter gemessen. Aus den beiden Werten wurde der Quotient (= relative Viskosität ηᵣₑₗ) ermittelt, davon 1,000 abgezogen und dieser Wert mit 1000 multipliziert. Das Resultat war der SV-Wert (solution viscosity").

Die Reibung wurde nach DIN 53 375 bestimmt. Die Gleitreibungszahl wurde 14 Tage nach der Produktion gemessen.

Die Oberflächenspannung wurde mit der sogenannten Tintenmethode (DIN 53 364) bestimmt.

Die Trübung der Folie wurde nach ASTM-D 1003-52 gemessen. Die Trübungsmessung nach Hölz wurde in Anlehnung an ASTM-D 1003-52 bestimmt, wobei jedoch zur Ausnutzung des optimalen Meßbereichs an vier übereinanderliegenden Folienlagen gemessen und anstelle einer 4°-Lochblende eine 1°-Spaltblende eingesetzt wurde.

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

### Bestimmung der Mindestsiegeltemperatur (Siegelanspringtemperatur)

Mit dem Siegelgerät HSG/ET der Firma Brugger wurden heißgesiegelte Proben (Siegelnaht 20 mm x 100 mm) hergestellt, indem eine Folie bei unterschiedlichen Temperaturen mit Hilfe zweier beheizter Siegelbacken bei einem Siegeldruck von 10 N/cm² und einer Siegeldauer von 0,5 s gesiegelt wurde. Aus den gesiegelten Proben wurden Prüfstreifen von 15 mm Breite geschnitten. Die T-Siegelnahtfestigkeit wurde wie bei der Bestimmung der Siegelnahtfestigkeit gemessen. Die Mindestsiegeltemperatur ist die Temperatur, bei der eine Siegelnahtfestigkeit von mindestens 0,5 N/15 mm erreicht wird.

Die folgenden Beispiele illustrieren die Erfindung. Die verwendeten Produkte (Warenzeichen und Herstellerfirma) sind jeweils nur einmal angegeben und beziehen sich dann auch auf die folgenden Beispiele.

### Beispiel 1

Das Polymer für die Deckschicht A wurde durch gemeinsame Polykondensation hergestellt. Dazu wurden Dimethylterephthalat und Naphthalin-2,6-dicarbonsäure-dimethylester in einem Reaktor im Molverhältnis 0,54 : 1,00 (entspricht einer Zusammensetzung von 30 Gew.-% Ethylenterephthalat-Einheiten und 70 Gew.-% Ethylen-2,6-naphthalat-Einheiten im fertigen Copolymer) gemischt und mit Ethyenglykol und 300 ppm Manganacetat als Katalysator versetzt. Bei einer Temperatur von 160 bis 250 °C und bei Atmosphärendruck wurde unter Rühren die Umesterung durchgeführt. Das dabei entstehende Methanol wurde abdestilliert. Anschließend wurde eine äquimolare Menge phosphorige Säure als Stabilisator und 400 ppm Antimontrioxid als Katalysator zugegeben. Bei 280 °C und einem Druck von weniger als 1 mbar wurde dann unter Rühren die Polykondensation durchgeführt. Anhand des am Rührer gemessenen Drehmoments ließ sich das erreichte Molekulargewicht ermitteln. Die Schmelze wurde nach Ende der Reaktion mit Stickstoff aus dem Reaktor gedrückt und granuliert.

### Beispiel 2

Es wurden handelsübliche Polyethylenterephthalat- und Polyethylen-2,6-naphthalat-Granulate verwendet. Die Granulate wurden jeweils etwa 4 h bei einer Temperatur von etwa 160 °C getrocknet und kristallisiert. Anschließend wurden die beiden Materialien in einem Verhältnis von 30 : 70 (30 Gew.-% Polyethylenterephthalat- und 70 Gew.-% Polyethylen-2,6-naphthalat) in einen Mischer gegeben und dort unter Rühren homogenisiert. Die Mischung wurde anschließend in einem Zweischnecken-Compounder (ZSK der Fa. Werner und Pfleiderer, Stuttgart) bei einer Temperatur von etwa 300 °C und einer Verweilzeit von ca. 3 min extrudiert. Die Schmelze wurde zu Strängen extrudiert und in Form von Chips geschnitten. In der Extrusion entstand ein Copolymer durch Reaktion zwischen dem Polyethylenterephthalat und Polyethylen-2,6-naphthalat.

### Beispiel 3

Beispiel 2 wurde wiederholt mit der Abweichung, daß Chips aus Polyethylenterephthalat und Polyethylen-2,6-naphthalat in einem Mischungsverhältnis von 3 : 7 direkt dem Einschneckenextruder für die Folienherstellung zugeführt wurden. Dort wurden die beiden Materialien bei etwa 300 °C extrudiert. Die Schmelze wurde filtriert und in einer Mehrschichtdüse zu einem Flachfilm ausgeformt und als Deckschicht der Basisschicht überlagert. Der Mehrschichtfilm wurde über die Düsenlippe ausgestoßen und auf einer Kühlwalze verfestigt. Die Verweilzeit der beiden Polymere in der Extrusion betrug ca. 5 min. Auch hier entstand das Copolymer in der Extrusion bei den angegebenen Bedingungen.

### Beispiel 4

Chips aus Polyethylenterephthalat wurden bei 160 °C auf eine Restfeuchte von weniger als 50 ppm getrocknet und dem Extruder für die Basisschicht zugeführt. Daneben wurden Chips aus Polyethylenterephthalat und Polyethylen-2,6-naphthalat (im Gewichtsverhältnis von 3 : 7) ebenfalls bei 160 °C auf eine Restfeuchte von 50 ppm getrocknet und den beiden Extrudern für die Deckschichten zugeführt. Die Bedingungen im Extruder für die Deckschichten waren wie in Beispiel 3.

Durch Coextrusion und anschließende stufenweise Orientierung in Längs- und Querrichtung wurde dann eine transparente dreischichtige A/B/C Folie mit einer Gesamtdicke von 12 µm hergestellt. Die Deckschichten hatten eine Dicke von jeweils 2,0 µm.

### Basisschicht B:

| | |
|---|---|
| 95 Gew.-% | Polyethylenterephthalat (RT 49 von Hoechst AG) mit einem SV-Wert von 800 und |
| 5 Gew.-% | Masterbatch aus 99 Gew.-% Polyethylenterephthalat und 1,0 Gew.-% Kieselsäurepartikel (®Sylobloc 44 H der Firma Grace) mit einer mittleren Teilchengröße von 4,5 µm. |

### Deckschicht A:

| | |
|---|---|
| 70 Gew.-% | Polyethylen-2,6-naphthalat (®Polyclear N 100 Prepolymer von Hoechst AG) mit einem SV-Wert von 600, |
| 20 Gew.-% | Polyethylenterephthalat mit einem SV-Wert von 800 und |
| 10 Gew.-% | Masterbatch aus 99,0 Gew.-% Polyethylenterephthalat und 1,0 Gew.-% Kieselsäurepartikel mit einer mittleren Teilchengröße von 2,0 µm. |

### Deckschicht C:

Copolymeres aus

| | |
|---|---|
| 82 Gew.-% | Ethylen-Isophthalat |
| 18 Gew.-% | Ethylen-Terephthalat |

Die einzelnen Verfahrensschritte waren:

| | | | |
|---|---|---|---|
| Extrusion | Temperaturen | Deckschicht A | 300 °C |
| | | Deckschicht C | 250 °C |
| | | Basisschicht | 300 °C |
| | Temperatur der Abzugswalze | | 30 °C |
| | Düsenspaltweite | | 1 mm |
| | Temperatur der Abzugswalze | | 30 °C |
| Längsstreckung | Temperatur | | 85-135 °C |
| | Längsstreckverhältnis | | 4,0 : 1 |
| Querstreckung | Temperatur | | 85-135 °C |
| | Querstreckverhältnis | | 4,0 : 1 |
| Fixierung | Temperatur | | 230 °C |

Die Folie hatte die geforderte Sauerstoffbarriere und siegelte auf der C-Seite.

### Beispiel 5

Analog zu Beispiel 4 wurde durch Coextrusion eine dreischichtige Folie mit einer Gesamtdicke von 12 µm hergestellt. Die Deckschicht A hatte eine Dicke von 2,0 µm, die Deckschicht C von 1,5 µm.

### Basisschicht:

| | |
|---|---|
| 100 Gew.-% | Polyethylenterephthalat mit einem SV-Wert von 600 |

### Deckschicht A:

| | |
|---|---|
| 70 Gew.-% | Polyethylen-2,6-naphthalat mit einem SV-Wert von 600, |
| 20 Gew.-% | Polyethylenterephthalat mit einem SV-Wert von 800 und |
| 10 Gew.-% | Masterbatch aus 99,0 Gew.-% Polyethylenterephthalat und 1,0 Gew.-% Kieselsäurepartikel mit einer mittleren Teilchengröße von 2,0 µm. |

### Deckschicht C:

| | |
|---|---|
| 50 Gew.-% | Polyethylen-2,6-naphthalat mit einem SV-Wert von 600 und |
| 50 Gew.-% | Polyethylenterephthalat mit einem SV-Wert von 800. |

Die Verfahrensbedingungen waren für alle Schichten wie im Beispiel 4.

### Beispiel 6

Eine coextrudierte Folie mit der Rezeptur gemäß Beispiel 5, bei der die Deckschicht A 2,0 µm dick und wie folgt zusammengesetzt war:

| | |
|---|---|
| 90 Gew.-% | Polyethylen-2,6-naphthalat mit einem SV-Wert von 600 und |
| 10 Gew.-% | Masterbatch aus 99,0 Gew.-% Polyethylenterephthalat und 1,0 Gew.-% Kieselsäurepartikel mit einer mittleren Teilchengröße von 1,0 µm, |

wurde unter den Verfahrensbedingungen gemäß Beispiel 4 hergestellt.

### Beispiel 7

Eine coextrudierte Folie mit der Rezeptur gemäß Beispiel 5, bei der die Deckschicht A 2,5 µm dick und wie folgt zusammengesetzt war:

| | |
|---|---|
| 90 Gew.-% | Polyethylen-2,6-naphthalat mit einem SV-Wert von 600, |
| 10 Gew.-% | Masterbatch aus 99,0 Gew.-% Polyethylen-2,6-naphthalat mit einem SV-Wert von 600 und 1,0 Gew.-% Kieselsäurepartikel mit einer mittleren Teilchengröße von 1,0 µm, |

wurde unter den Verfahrensbedingungen gemäß Beispiel 4 hergestellt. Doch wurden jetzt die Temperaturen bei der Längs- und Querstreckung um etwa 10 °C angehoben.

### Beispiel 8

Analog zu Beispiel 5 wurde durch Coextrusion eine dreischichtige Folie mit einer Basisschicht und zwei Deckschichten hergestellt. Die Gesamtdicke der Folie betrug 12 µm. Die Deckschicht A hatte dabei eine Dicke von 3, die Deckschicht C von 1,5 µm.

### Basisschicht:

| | |
|---|---|
| 100 Gew.-% | Polyethylenterephthalat mit einem SV-Wert von 800 |

### Deckschicht A:

| | |
|---|---|
| 100 Gew.-% | Polyethylen-2,6-naphthalat mit einem SV-Wert von 800 |

### Deckschicht C:

| | |
|---|---|
| 50 Gew.-% | Polyethylen-2,6-naphthalat mit einem SV-Wert von 600 und |
| 50 Gew.-% | Polyethylenterephthalat mit einem SV-Wert von 800. |

Die Verfahrensbedingungen waren für alle Schichten wie in Beispiel 7 angegeben.

### Beispiel 9

Es wurde eine dreischichtige Folie wie im Beispiel 5 beschrieben hergestellt mit der einzigen Abweichung, daß die Dicke der Deckschichten A und C nur 1,0 µm betrug.

### Vergleichsbeispiel V1

Es wurde eine Folie entsprechend Beispiel 4 hergestellt. Für die Deckschicht A wurde jedoch ein Copolyester aus 82 Gew.-% Ethylenterephthalat und 18 Gew.-% Ethylenisophthalat verwendet.

Die Folie hatte nicht die geforderte Barriere.

Die Eigenschaften der gemäß den Beispielen 4 bis 12 und V1 hergestellten Folien sind in Tabelle 2 zusammengestellt.

**Tabelle 1**

| Beispiel Nr. | Ethylen-2,6-naphthalat-Einheiten in der Deckschicht A (in Gew.-%) | Ethylenterephthalat-Einheiten in der Deckschicht A (in Gew.-%) | Ethylenisophthalat-Einheiten in der Deckschicht A (in Gew.-%) |
|---|---|---|---|
| 4 | 70 | 30 | 0 |
| 5 | 70 | 30 | 0 |
| 6 | 90 | 10 | 0 |
| 7 | 100 | 0 | 0 |
| 8 | 100 | 0 | 0 |
| 9 | 100 | 0 | 0 |
| V1 | 0 | 82 | 18 |

**Tabelle 2**

| Beispiel Nr. | Foliendicke (µm) | Deckschichtdicke A/C (µm) | Folienaufbau | Sauerstoffpermeation (cm³/m² bar d) | Glanz (60° Meßwinkel) | | Trübung | Mindestsiegeltemperatur C gegen C ° C |
|---|---|---|---|---|---|---|---|---|
| | | | | | A-Seite | C-Seite | | |
| 4 | 12 | 2,0/2,0 | ABC | 70 | 175 | 175 | 2,5 | 100 |
| 5 | 12 | 2,0/1,5 | ABC | 80 | 174 | 175 | 2,6 | 110 |
| 6 | 12 | 2,0/1,5 | ABC | 65 | 176 | 175 | 2,5 | 110 |
| 7 | 12 | 2,5/1,5 | ABC | 55 | 155 | 155 | 4,0 | 110 |
| 8 | 12 | 3,0/1,5 | ABC | 45 | 160 | 155 | 4,0 | 110 |
| 9 | 12 | 1,0/1,0 | ABC | 62 | 160 | 165 | 3,5 | 120 |
| V1 | 12 | 3,0/3,0 | ABC | 102 | 145 | 160 | 3,0 | 100 |

## Patentansprüche

1. Biaxial orientierte, siegelfähige Polyesterfolie mit einer Basisschicht B, die zu mindestens 80 Gew.-% aus einem thermoplastischen Polyester besteht, und zwei Deckschichten A und C, **dadurch gekennzeichnet, daß** die Deckschicht A teilkristallin ist und aus einem Polymer oder einem Gemisch von Polymeren besteht, das mindestens 40 Gew.-% Ethylen-2,6-naphthalat-Einheiten enthält und bis zu 40 Gew.-% an Ethylen-terephthalat-Einheiten und ggf. bis zu 60 Gew.-% an Einheiten aus cycloaliphatischen oder aromatischen Diolen und/oder Dicarbonsäuren enthält, und die gegenüberliegende Deckschicht C amorph ist und eine Siegelanspringtemperatur von ≤ 130 °C aufweist.

2. Folie gemäß Anspruch 1, **dadurch gekennzeichnet, daß** die Deckschicht A mindestens 65 Gew.-%, bevorzugt mindestens 70 Gew.-%, an Ethylen-2,6-naphthalat-Einheiten enthält.

3. Folie gemäß Anspruch 1 oder 2, **dadurch gekennzeichnet, daß** sie eine Sauerstoffpermeation von weniger als 80 cm³/m² bar d, bevorzugt weniger als 75 cm³/m² bar d, besonders bevorzugt weniger als 70 cm³/m² bar d, aufweist.

4. Folie gemäß Anspruch 1, 2 oder 3, **dadurch gekennzeichnet, daß** die siegelfähige Deckschicht C aus Copolyestern besteht, die aus zwei oder mehreren Monomerbausteinen aufgebaut sind, wobei die Dicarbonsäuren enthaltenen Monomereinheiten ausgewählt sind aus 2,6-Naphthalat-Dicarbonsäure, Terephthalsäure, Isophthalsäure und Hexahydroterephthalsäure und die Diolkomponenten ausgewählt sind aus Ethylenglykol, Diethylenglykol, Triethylenglykol oder Neopentylglykol.

5. Folie gemäß einem oder mehreren der Ansprüche 1 bis 4, **dadurch gekennzeichnet, daß** die Deckschichten A und C eine Dicke von 0,2 bis 6 µm, vorzugsweise von 0,3 bis 5,5 µm, besonders bevorzugt von 0,3 bis 5,0 µm, aufweist.

6. Folie gemäß einem oder mehreren der Ansprüche 1 bis 5, **dadurch gekennzeichnet, daß** sie dreischichtig ist und aus der Basisschicht und den Deckschichten A und C besteht.

7. Folie gemäß einem oder mehreren der Ansprüche 1 bis 6, **dadurch gekennzeichnet, daß** mindestens eine der Deckschichten pigmentiert ist.

8. Folie gemäß einem oder mehreren der Ansprüche 1 bis 6, **dadurch gekennzeichnet, daß** sie auf mindestens einer Seite mit einer Corona behandelt ist.

9. Folie gemäß einem oder mehreren der Ansprüche 1 bis 8, **dadurch gekennzeichnet, daß** sie auf mindestens einer Seite in-line beschichtet ist.

10. Transparente, biaxial orientierte und siegelfähige Polyesterfolie mit einer Basisschicht B, die zu mindestens 80 Gew.-% aus einem thermoplastischen Polyester besteht, und zwei Deckschichten A und C, **dadurch gekennzeichnet, daß** die Deckschicht A aus einem Polyester oder einem Gemisch von Polymeren besteht, das mindestens 5 Gew.-% Ethylen-2,6-naphthalat-Einheiten enthält und bis zu 40 Gew.-% an Ethylen-terephthalat-Einheiten und ggf. bis zu 60 Gew.-% an Einheiten aus cycloaliphatischen oder aromatischen Diolen und/oder Dicarbonsäure enthält und die gegenüberliegende Deckschicht C siegelfähig ist und einen Siegelbereich von ca. 100 bis 200 °C aufweist.

11. Verfahren zur Herstellung der Folie nach einem oder mehreren der Ansprüche 1 bis 10, umfassend die Schritte
a) Herstellen einer Folie aus Basis- und Deckschicht(en) durch Coextrusion,
b) biaxiales Verstrecken der Folie und
c) Thermofixieren der verstreckten Folie.

12. Verwendung der Folie nach einem oder mehreren der Ansprüche 1 bis 9 zum Verpacken von Nahrungs- und Genußmitteln.

## Claims

1. A biaxially oriented, sealable polyester film having a base layer B at least 80% by weight of which is composed of a thermoplastic polyester, and having two outer layers A and C, wherein the outer layer A is partly crystalline and is composed of a polymer or of a mixture of polymers which comprises at least 40% by weight of ethylene 2,6-naphthalate units and up to 40% by weight of ethylene terephthalate units and, if desired, up to 60% by weight of units from cycloaliphatic or aromatic diols and/or dicarboxylic acids, and the opposite outer layer C is amorphous and has a lowest sealing temperature of ≤ 130°C.

2. A film as claimed in claim 1, wherein the outer layer A comprises at least 65% by weight, preferably at least 70% by weight, of ethylene 2,6-naphthalate units.

3. A film as claimed in claim 1 or 2, which has an oxygen permeability of less than 80 cm³/m² bar d, preferably less than 75 cm³/m² bar d, particularly preferably less than 70 cm³/m² bar d.

4. A film as claimed in any of claims 1, 2 and 3, wherein the sealable outer layer C is composed of copolyesters which have been built up from two or more monomeric building blocks, where the monomer units comprising dicarboxylic acids are selected from the class consisting of naphthalene-2,6-dicarboxylic acid, terephthalic acid, isophthalic acid and hexahydroterephthalic acid, and the diol components are selected from the class consisting of ethylene glycol, diethylene glycol, triethylene glycol and neopentyl glycol.

5. A film as claimed in one or more of claims 1 to 4, wherein the outer layers A and C have a thickness of from 0.2 to 6 µm, preferably from 0.3 to 5.5 µm, particularly preferably from 0.3 to 5.0 µm.

6. A film as claimed in one or more of claims 1 to 5, which has three layers and is composed of the base layer and the outer layers A and C.

7. A film as claimed in one or more of claims 1 to 6, wherein at least one of the outer layers has been pigmented.

8. A film as claimed in one or more of claims 1 to 6, at least one side of which has been corona-treated.

9. A film as claimed in one or more of claims 1 to 8, at least one side of which has been in-line coated.

10. A transparent, biaxially oriented and sealable polyester film having a base layer B at least 80% of which is composed of a thermoplastic polyester, and having two outer layers A and C, wherein the outer layer A is composed of a polyester or of a mixture of polymers which comprises at least 5% by weight of ethylene 2,6-naphthalate units and up to 40% by weight of ethylene terephthalate units and, if desired, up to 60% by weight of units from cycloaliphatic or aromatic diols and/or dicarboxylic acids, and the opposite outer layer C is sealable and has a sealing range of from about 100 to 200°C.

11. A process for producing the film as claimed in one or more of claims 1 to 10, encompassing the steps
a) producing a film from base and outer layer(s) by coextrusion,
b) biaxial orientation of the film and
c) heat-setting of the oriented film.

12. The use of the film as claimed in one or more of claims 1 to 9 for packaging foods and other consumable items.

## Revendications

1. Feuille de polyester scellable, orientée biaxialement, ayant une couche de base B, qui contient au moins 80% en poids d'un polyester thermoplastique, et deux couches de recouvrement A et C, **caractérisée en ce que** la couche de recouvrement A est partiellement cristalline et comprend un polymère ou un mélange de polymères qui contient au moins 40% en poids d'unités éthylène-2,6-naphtalate et jusqu'à 40% en poids d'unités ethylène-téréphtalate et éventuellement jusqu'à 60% en poids d'unités à base de diols cycloaliphatiques ou aromatiques et/ou de diacides carboxyliques, et **en ce que** la couche de recouvrement C située en face est amorphe et présente une température de début de scellage ≤ 30° C.

2. Feuille selon la revendication 1, **caractérisée en ce que** la couche de recouvrement A contient au moins 60% en poids, de préférence au moins 70% en poids, d'unités éthylène-2,6-naphtalate.

3. Feuille selon la revendication 1 ou 2, **caractérisée en ce qu'**elle présente une perméation à l'oxygène inférieure à 80 cm³/m².bar.jour, de préférence inférieure à 75 cm³/m².bar.jour, et de façon particulièrement préférentielle inférieure à 70 cm³/m².bar.jour.

4. Feuille selon la revendication 1, 2 ou 3, **caractérisée en ce que** la couche de recouvrement C scellable est composée de copolyesters qui sont constitués d'au moins deux constituants monomères, où les unités monomères de type acide carboxylique qui y sont contenues sont choisies parmi le 2,6-naphtalate-diacide carboxylique, l'acide téréphtalique, l'acide isophtalique et l'acide hexahydrotéréphtalique, et **en ce que** les composants diols sont choisis parmi l'éthylèneglycol, le diéthylèneglycol, le triéthylèneglycol ou le néopentylglycol.

5. Feuille selon l'une ou plusieurs des revendications 1 à 4, **caractérisée en ce que** les couches de recouvrement A et C présentent une épaisseur de 0,2 à 6 microns, de préférence de 0,3 à 5,5 microns et, de façon particulièrement préférentielle entre 0,3 et 5,0 microns.

6. Feuille selon l'une ou plusieurs des revendications 1 à 5, **caractérisée en ce qu'**elle est constituée de trois couches et **en ce qu'**elle est constituée de la couche de base et des couches de recouvrement A et C.

7. Feuille selon l'une ou plusieurs des revendications 1 à 6, **caractérisée en ce qu'**au moins une des couches de recouvrement est pigmentée.

8. Feuille selon l'une quelconque des revendications 1 à 6, **caractérisée en ce qu'**au moins une de ses faces est traitée par une corona.

9. Feuille selon l'une ou plusieurs des revendications 1 à 8, **caractérisée en ce qu'**elle est recouverte en ligne sur au moins une de ses faces.

10. Feuille de polyester transparente, orientée biaxialement, et scellable, ayant une couche de base B, qui comprend un polyester thermoplastique à raison d'au moins 80% en poids, et deux couches de recouvrement A et C, **caractérisée en ce que** la couche de recouvrement A comprend un polyester ou un mélange de dimères, qui comprend au moins 5% en poids d'unités éthylène-2,6-naphtalate et jusqu'à 40% en poids d'unités éthylène-téréphtalate et éventuellement jusqu'à 60% en poids d'unités à base de diols cycloaliphatiques ou aromatiques et/ou d'acide dicarboxylique, et **en ce que** la couche C située en face est scellable et présente un domaine de scellabilité d'environ 100 à 200°C.

11. Procédé de préparation de la feuille selon l'une ou plusieurs des revendications 1 à 10, comprenant les étapes de :
a) fabrication d'une feuille à base de couche(s) de base et de recouvrement par coextrusion,
b) étirement biaxial de la feuille, et
c) thermofixation de la feuille étirée.

12. Utilisation de la feuille selon l'une ou plusieurs des revendications 1 à 9, pour l'emballage d'aliments ou de produits de consommation ("*Genußmitteln*").
